# EUROPÄISCHE PATENTSCHRIFT

(11) **EP 2 753 502 B1**
(45) Veröffentlichungstag und Bekanntmachung des Hinweises auf die Patenterteilung: **01.06.2016**
(21) Anmeldenummer: 12761901.3
(22) Anmeldetag: 06.09.2012
(51) Int. Cl.: B60R 11/00, B60R 11/02, B60K 35/00, B60K 37/00, B60K 37/06

(54) **HALTEVORRICHTUNG ZUR HALTERUNG EINES TABLET-PC IN EINEM KRAFTFAHRZEUG**
HOLDING DEVICE FOR HOLDING A TABLET PC IN A MOTOR VEHICLE
DISPOSITIF SERVANT DE SUPPORT À UNE TABLETTE ÉLECTRONIQUE DANS UN VÉHICULE À MOTEUR

(30) Priorität: 09.09.2011 DE 202011105500 U
(43) Veröffentlichungstag der Anmeldung: 16.07.2014
(73) Patentinhaber: paragon AG, 33129 Delbrück (DE)
(72) Erfinder: ALTMEYER, Michael, 90409 Nürnberg (DE)
(74) Vertreter: Lelgemann, Karl-Heinz
(86) Internationale Anmeldenummer: PCT/EP2012/003738
(87) Internationale Veröffentlichungsnummer: WO 2013/034296

(56) Entgegenhaltungen:
- WO-A1-2004/069599
- DE-A1-102008 014 142
- US-A1- 2010 036 600

## Beschreibung

Die Erfindung bezieht sich auf eine Haltevorrichtung zur Halterung eines Tablet-PC in einem Kraftfahrzeug.

Eine der gegenwärtigen Herausforderungen der Automobilindustrie ist die Vernetzung mobiler Consumerelektronik, z.B. von Smartphones und Tablet-PC mit dem Kraftfahrzeug. Ein grundsätzliches Problem hierbei sind die unterschiedlichen Entwicklungszyklen, welche für Kraftfahrzeuge vergleichsweise lang und für Consumerelektronik sehr kurz sind. Eine in der Entwicklungsphase eines Kraftfahrzeugs aktuelle Consumerelektronik ist zu dem Zeitpunkt, zu dem das entwickelte Kraftfahrzeug auf den Markt kommt, meist bereits veraltet und somit für den Endkunden von geringem Interesse. Entsprechendes gilt für im Kraftfahrzeug integrierte Benutzerelektronik, wie beispielsweise Touch-Displays oder Navigationsgeräte.

Eine Haltevorrichtung mit den Merkmalen des Oberbegriffs des Anspruchs 1 zeigt die US 2010/ 036600 A1. Ausgehend von dem vorstehend geschilderten Stand der Technik liegt der Erfindung die Aufgabe zugrunde, eine Haltevorrichtung zur Halterung eines Tablet-PC in einem Kraftfahrzeug zur Verfügung zu stellen, die mit einem vergleichsweise geringen technisch-konstruktiven Aufwand in einer Mittelkonsole des Kraftfahrzeugs integrierbar ist.

Diese Aufgabe wird erfindungsgemäß durch eine Haltevorrichtung zur Halterung eines Tablet-PC in einem Kraftfahrzeug gelöst, die eine Aufnahme, die in einen Schacht einer Fahrzeugmittelkonsole einschiebbar und dort fixierbar ist, eine Kippmechanik, die in der Aufnahme gehaltert und zwischen einer in die Aufnahme eingefahrenen Stellung und einer aus der Aufnahme herausgefahrenen Stellung verstellbar ist, eine Aufnahmeschale, die bei ausgefahrener Stellung der Kippmechanik an der Vorderseite derselben lösbar anbringbar ist und in der der Tablet-PC aufnehmbar ist, und eine Verriegelungseinrichtung aufweist, mittels der die Kippmechanik in ihrer in der Aufnahme eingefahrenen Stellung verriegelbar ist. Da die Kippmechanik mit der Aufnahmeschale aus der Aufnahme der Haltevorrichtung herausfahrbar ist, ist es möglich, ohne großen Aufwand den Tablet-PC aus der Aufnahmeschale zu entnehmen bzw. diesen in die Aufnahmeschale hineinzuschieben.

Um die erfindungsgemäße Haltevorrichtung optisch ansprechend zu gestalten, ist es vorteilhaft, wenn die Aufnahmeschale der Haltevorrichtung von einer Schachtblende umgeben ist, die eine Öffnung des Schachts der Fahrzeugmittelkonsole abschließend umgibt.

Gemäß einer vorteilhaften Ausführungsform der erfindungsgemäßen Haltevorrichtung weist diese einen Dreh-Drücksteller auf, der in bzw. an der Schachtblende gehaltert ist und mittels dem Funktionen des in die Aufnahmeschale eingeschobenen Tablet-PC betätigbar sind.

Darüber hinaus ist es möglich, die erfindungsgemäße Haltevorrichtung mit einem Infrarotsensor auszurüsten, der in bzw. an der Schachtblende gehaltert ist und mittels dem Gesten einer Bedienungsperson, z.B. eine Wischbewegung od.dgl., berührungslos erkennbar sind.

Wenn die erfindungsgemäße Halterungsvorrichtung eine Führungseinrichtung aufweist, die zwischen der Aufnahme einerseits und der Kippmechanik andererseits angeordnet ist und mittels der die Kippmechanik in ihrer aus der Aufnahme ausgefahrenen Stellung so positionierbar ist, dass ihre Vorderfläche etwa vertikal zu einem Fahrer bzw. Beifahrer angeordnet ist, ist es möglich, dass die Aufnahmeschale im ausgefahrenen Zustand der Haltevorrichtung ein angenehmes Einschieben und Herausnehmen des Tablet-PC ermöglicht. Da die Aufnahmeschale im ausgefahrenen Zustand der Haltevorrichtung von allen Seiten zugänglich, ist es darüber hinaus möglich, einen Tablet-PC statt von der Seite auch von oben in die Aufnahmeschale zu schieben. Dies kann insbesondere dann zweckmäßig sein, wenn sich diejenige Seite des Tablet-PC ändert, an der dessen Steckerverbindung angeordnet ist.

Vorteilhaft weist die Führungseinrichtung in beiden einander gegenüberliegenden Seitenwänden der Aufnahme jeweils zwei gekrümmte Führungsschlitze auf, in die entsprechend an Seitenwänden der Kippmechanik angeordnete Führungsbolzen eingreifen. Bei entsprechender Ausgestaltung der Schachtblende und der infolge der Führungseinrichtung möglichen exakten Positionierbarkeit der Aufnahmeschale ist es möglich, die Oberfläche der Aufnahmeschale so auszugestalten, dass sie im eingefahrenen Zustand der Haltevorrichtung annähernd bündig mit der Schachtblende abschließt. Dadurch können im eingebauten Zustand der Haltevorrichtung auch ohne in deren Aufnahmeschale eingelegten Tablet-PC die von der Automobilindustrie geforderten Kopfaufschlagkriterien eingehalten werden.

Um die Herausbewegung der Kippmechanik aus der Aufnahme mit einem vergleichsweise geringen technisch-konstruktiven Aufwand zu realisieren, ist es vorteilhaft, wenn zwischen der Aufnahme einerseits und der Kippmechanik andererseits zumindest eine, vorzugsweise zwei Torsionsfedern angeordnet ist bzw. sind, mittels der bzw. denen die Kippmechanik in Richtung auf ihre aus der Aufnahme ausgefahrene Stellung vorgespannt ist.

Einer kontrollierten Herausbewegung der Kippmechanik und damit der Aufnahmeschale aus der Aufnahme ist es darüber hinaus zuträglich, wenn auf der Innenseite der beiden Seitenwände der Aufnahme jeweils ein Rotationsdämpfer angeordnet ist, der im Zusammenwirken mit einer entsprechend an der jeweiligen Seitenwand der Kippmechanik ausgebildeten Zahnflankenkontur bzw. Verzahnung eine Bewegung der Kippmechanik in Richtung auf deren aus der Aufnahme herausgefahrene Stellung verlangsamt.

Um eine Notbedienung kraftfahrzeugseitiger Einrichtungen, z.B. eines Radios, zu ermöglichen, ist es vorteilhaft, wenn die Kippmechanik an ihrer Vorderseite ein Display und vorzugsweise vier Tasten aufweist, mittels denen fahrzeugseitige Einrichtungen, z.B. ein Radio od.dgl., bedien- bzw. steuerbar sind.

Um mittels der erfindungsgemäßen Haltevorrichtung zu dem einen elektrischen und elektronischen Anschluss zwischen dem in die Aufnahmeschale eingeschobenen Tablet-PC und fahrzeugseitigen Einrichtungen zu ermöglichen, z.B. um den Tablet-PC während einer Fahrt zu laden und Bedienelemente kraftfahrzeugseitiger Einrichtungen mittels des Tablet-PC zu steuern, ist es vorteilhaft, wenn die Kippmechanik an ihrer Vorderseite eine Steckerverbindung aufweist, die vorzugsweise als 30-polige Steckerleiste ausgebildet ist, und die Aufnahmeschale an ihrer Rückseite eine Steckerverbindung aufweist, die vorzugsweise als 30-poliger Stecker ausgebildet ist, wobei die kippmechanikseitige und die aufnahmeschalenseitige Steckerverbindung bei Anbringung der Aufnahmeschale an der Kippmechanik in Eingriff bringbar sind.

Das Aufmontieren der Aufnahmeschale an der Kippmechanik ist in einfacher Weise realisierbar, wenn auf der Vorderseite der Kippmechanik zwei Fanghaken ausgebildet sind, mit denen zwei auf der Rückseite der Aufnahmeschale ausgebildete Öffnungen in Eingriff bringbar sind, wobei hinter der Vorderseite der Kippmechanik eine federvorgespannte Rasthakenverriegelung vorgesehen ist, die mit Taschen, die auf der Rückseite der Aufnahmeschale ausgebildet sind, verrastbar ist.

Wenn in einer Seitenwand der Kippmechanik eine Durchbrechung ausgebildet ist, durch die hindurch in der aus der Aufnahme ausgefahrenen Stellung der Kippmechanik die Rasthakenverriegelung in eine die Verrastung zwischen der kippmechanikseitigen Rasthakenverriegelung und den aufnahmeschalenseitigen Taschen aufhebende Freigabestellung verstellbar ist, ist vergleichsweise einfach ein Austausch der Aufnahmeschale möglich, so dass die erfindungsgemäße Haltevorrichtung durch bloßen Austausch der Aufnahmeschale an aus einem jüngeren Entwicklungszyklus stammende Tablet-PC anpassbar ist. Vorteilhaft ist die Aufnahmeschale der Haltevorrichtung an ihrem Randbereich so ausgestaltet, dass sie sich in in die Aufnahme eingefahrener Stellung der Kippmechanik an eine Kontur der Schachtblende anpasst.

Eine von der Aufnahmeschale zur Halterung des Tablet-PC ausgebildete Tasche ist erfindungsgemäß so geformt, dass der Tablet-PC seitlich in die Tasche einschiebbar ist und dass beim Einschieben des Tablet-PC ein Steckeranschluss des Tablet-PC mit einem Steckeranschluss der Aufnahmeschale in Eingriff gerät.

Gemäß einer weiteren vorteilhaften Ausführungsform der erfindungsgemäßen Haltevorrichtung weist deren Aufnahmeschale etwa mittig eine Ausnehmung auf, durch die hindurch das kippmechanikseitige Display sichtbar und die kippmechanikseitigen Tasten betätigbar sind, wenn in der Aufnahmeschale kein Tablet-PC angeordnet ist.

Um die Handhabung beim Herausnehmen des Tablet-PC aus der Aufnahmeschale zu erleichtern, ist es vorteilhaft, wenn die Aufnahmeschale eine randseitige Aussparung bzw. Griffmulde aufweist, durch die hindurch der Tablet-PC beim Herausnehmen desselben aus der Aufnahmeschale greifbar ist.

Eine Verriegelung der Kippmechanik und damit der Aufnahmeschale in der in die Aufnahme eingefahrenen Stellung ist mit einem vergleichsweise geringen technisch-konstruktiven Aufwand realisierbar, wenn die Verriegelungseinrichtung der Haltevorrichtung einen Schieber aufweist, der gegen die Schachtblende zur Blockierung der Kippmechanik in deren in der Aufnahme eingefahrenen Stellung federvorgespannt ist und mittels eines in der Schachtblende angeordneten und von deren Vorderseite her betätigbaren Knopfes in eine Freigabestellung verstellbar ist, in der die Kippmechanik aus der Aufnahme heraus bewegbar ist.

Gemäß einer weiteren vorteilhaften Ausführungsform kann die Haltevorrichtung anstelle des Dreh-Drückstellers eine Einstellvorrichtung aufweisen, die an der Aufnahmeschale angeordnet sein kann und mittels der Funktionen des in die Aufnahmeschale eingeschobenen Tablet-PC betätigbar sind.

Bei dieser Einstellvorrichtung kann es sich z.B. um eine Taste zum Ein- und Ausstellen einer Lautsprechereinrichtung und um eine Wippe zur Einstellung der Lautstärke handeln.

Eine Freigabetaste der der Verriegelung der Kippmechanik in der Aufnahme dienenden Verriegelungseinrichtung kann vorteilhaft ebenfalls an der Aufnahmeschale angeordnet sein.

Anstelle einer rein mechanischen Lösung ist auch eine Ausgestaltung der Verriegelungseinrichtung zweckmäßig, bei der mittels der Freigabetaste ein Hubmagnet der Verriegelungseinrichtung, der in einer Blockierstellung die Kippmechanik in deren in der Aufnahme eingefahrenen Stellung verriegelt, aus seiner Blockierstellung in eine Freigabestellung verstellbar ist, in der die Kippmechanik aus ihrer in der Aufnahme eingefahrenen Stellung in ihre aus der Aufnahme herausgefahrene Stellung verstellbar ist.

Im Folgenden wird die Erfindung anhand von Ausführungsformen unter Bezugnahme auf die Zeichnung näher erläutert.

Es zeigen:
- Figur 1: eine perspektivische Darstellung einer Ausführungsform einer erfindungsgemäßen Haltevorrichtung;
- Figur 2: eine perspektivische Explosionsdarstellung wesentlicher Bestandteile der in Figur 1 gezeigten Ausführungsform der erfindungsgemäßen Haltevorrichtung;
- Figur 3: eine perspektivische Darstellung einer Aufnahme der in den Figuren 1 und 2 gezeigten Ausführungsform der erfindungsgemäßen Haltevorrichtung;
- Figur 4: eine perspektivische Explosionsdarstellung einer Kippmechanik der in den Figuren 1 und 2 gezeigten Ausführungsform der erfindungsgemäßen Haltevorrichtung;
- Figur 5: eine perspektivische Darstellung der in Figur 4 gezeigten Kippmechanik von der anderen Seite her;
- Figur 6: eine perspektivische Darstellung einer auf die in den Figuren 4 und 5 gezeigte Kippmechanik aufmontierten Aufnahmeschale der in den Figuren 1 und 2 gezeigten Ausführungsform der erfindungsgemäßen Haltevorrichtung;
- Figur 7: eine perspektivische Darstellung der in Figur 6 gezeigten Halteschale von deren Rückseite her;
- Figur 8: eine Darstellung der auf die Kippmechanik aufmontierten Aufnahmeschale mit einer Schachtblende;
- Figur 9: eine perspektivische Darstellung der Aufnahmeschale von der Vorderseite her;
- Figur 10: eine Figur 1 entsprechende perspektivische Darstellung der erfindungsgemäßen Haltevorrichtung ohne in diese eingesetzten Tablet-PC;
- Figur 11: eine abgewandelte Aufnahmeschale einer weiteren Ausführungsform der erfindungsgemäßen Haltevorrichtung; und
- Figur 12: eine Prinzipdarstellung einer weiteren Ausgestaltung der Verriegelungseinrichtung der erfindungsgemäßen Haltevorrichtung.

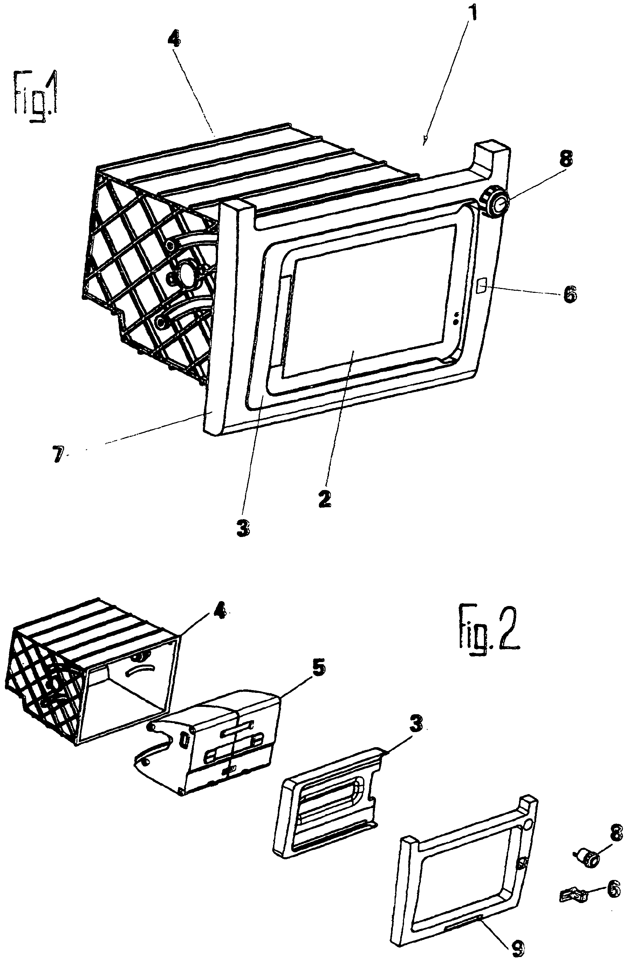

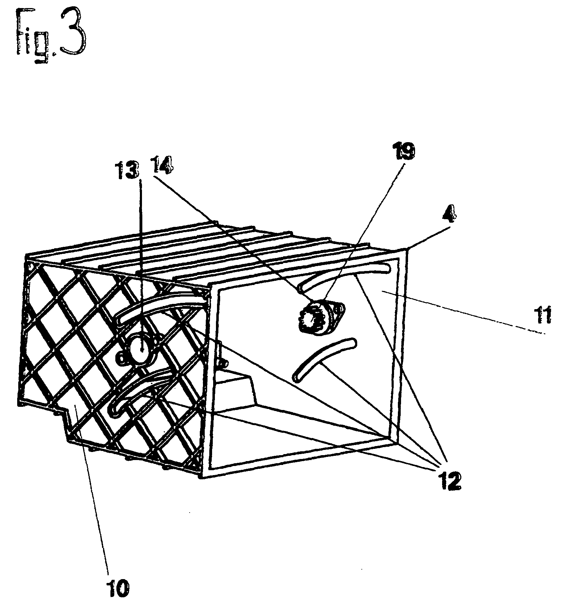

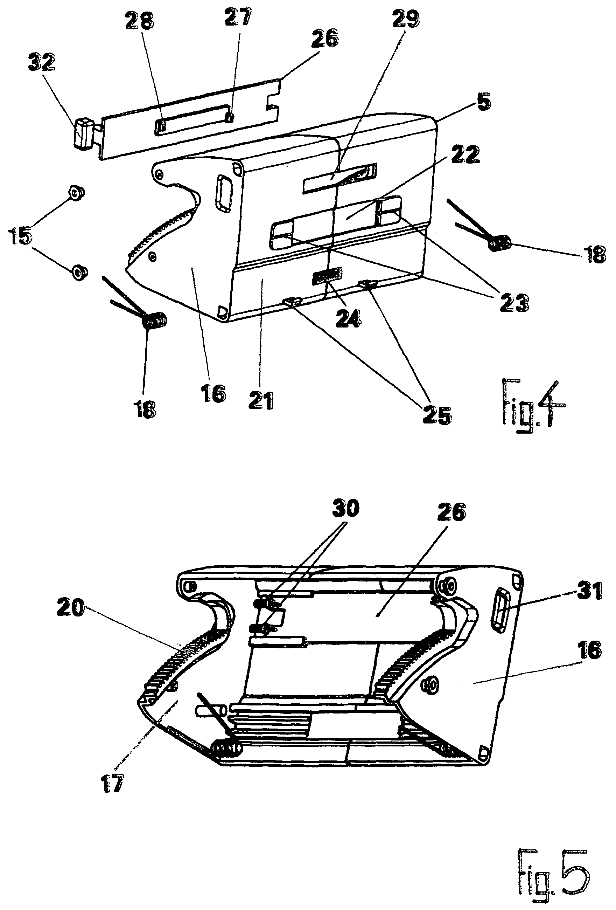

Eine anhand der Figuren 1 bis 10 im Folgenden beschriebene und erläuterte Ausführungsform einer erfindungsgemäßen Haltevorrichtung 1 dient der Integration eines Tablet-PC 2 in eine in den Figuren nicht gezeigte Mittelkonsole eines Kraftfahrzeugs.

Wesentlich für die erfindungsgemäße Haltevorrichtung 1 ist, dass eine Aufnahmeschale 3 derselben, in die der vorstehend erwähnte Tablet-PC 2 einschiebbar ist, ausgetauscht bzw. gewechselt werden kann; somit ist es möglich, Tablet-PC unterschiedlicher Bauart in die Mittelkonsole des Kraftfahrzeugs zu integrieren.

Wie insbesondere aus Figur 2 hervorgeht, besteht die beschriebene Ausführungsform der erfindungsgemäßen Haltevorrichtung 1 im Wesentlichen aus einer Aufnahme 4, die in einen in den Figuren nicht gezeigten Schacht der Mittelkonsole des Kraftfahrzeugs eingeschoben werden kann, einer Kippmechanik 5, die in der Aufnahme 4 gehaltert und zwischen einer in die Aufnahme 4 eingefahrenen Stellung und einer aus der Aufnahme 4 herausgefahrenen Stellung verstellbar ist, der vorstehend bereits erwähnten Aufnahmeschale 3 für den Tablet-PC 2 und einer Verriegelungseinrichtung 6, mittels der die Kippmechanik 5 in ihrer in der Aufnahme 4 eingefahrenen Stellung verriegelbar ist.

Des Weiteren ist an der Öffnung des Schachts der Mittelkonsole, der als Doppel-DIN-Schacht ausgeführt sein kann, eine Schachtblende 7 vorgesehen. In die Schachtblende 7 sind ein Dreh-Drücksteller 8, mittels dem Funktionen des in die Aufnahmeschale 3 eingeschobenen Tablet-PC 2 betätigbar sind, und ein Infrarotsensor 9 integriert, mittels dem Gesten einer Bedienungsperson, z.B. eine Wischbewegung od.dgl., berührungslos erkennbar sind.

Die Aufnahme 4 für die Kippmechanik 5 ist in den Schacht der Mittelkonsole des Fahrzeugs einschiebbar. In den beiden Seitenwänden 10, 11 der Aufnahme 4 sind jeweils zwei Führungsschlitze 12 ausgestaltet. Einander in den Seitenwänden 10, 11 gegenüberliegende und zugeordnete Führungsschlitze 12 entsprechen einander hinsichtlich Länge, Anordnung und Krümmung. In den beiden Seitenwänden 10, 11 der Aufnahme 4 ist darüber hinaus zwischen den beiden Führungsschlitzen 12 jeweils eine Montageöffnung 13 vorgesehen, in der jeweils ein Rotationsdämpfer 14 gehaltert ist.

Zur Montage der Haltevorrichtung 1 wird die Kippmechanik 5 in die Aufnahme 4 eingeschoben, wobei dann durch die Führungsschlitze 12 hindurch Führungsbolzen 15 in in den Seitenwänden 16, 17 der Kippmechanik ausgebildete Bohrungen eingeschraubt werden, so dass die Kippmechanik 5 geführt durch die Führungsbolzen 15 und die Führungsschlitze 12 definiert in Bezug auf die Aufnahme 4 bewegbar ist. Hierbei laufen die kippmechanikseitigen Führungsbolzen 15 in den aufnahmeseitigen Führungsschlitzen 12. Hierdurch kann die Kippmechanik 5 in einer definierten Kurve aus der Aufnahme 4 herausfahren bzw. aus ihrer ausgefahrenen Stellung in einer definierten Kurve in die Aufnahme 4 hineinfahren.

Die Ausfahrbewegung wird mittels zweier Torsionsfedern 18 realisiert, die einseitig in der Aufnahme 4 festgelegt sind und mit ihrer anderen Seite die Kippmechanik 5 gegen die Aufnahme 4 nach vorne drücken. Mittels der vorstehend erwähnten Rotationsdämpfer 14 wird ein schlagartiges Ausfahren der Kippmechanik 5 aus der Aufnahme 4 vermieden. Dem Benutzer bzw. dem Fahrer oder Beifahrer wird eine angenehme Ausfahrbewegung präsentiert.

Hierzu laufen die Rotationsdämpfer 14 mit jeweils einem Zahnrad 19 auf jeweils einer Zahnflankenkontur bzw. Verzahnung 20, die an der Seitenwand 16 bzw. 17 der Kippmechanik 5 angeordnet bzw. ausgebildet ist.

An der Vorderseite 21 der Kippmechanik 5 sind als Notbedienung ein Display 22 und im dargestellten Ausführungsbeispiel vier Tasten 23 angeordnet bzw. ausgebildet. Mittels des Displays 22 und der Tasten 23 kann der Benutzer auch ohne in die Aufnahmeschale 3 eingelegten Tablet-PC 2 kraftfahrzeugseitige Einrichtungen, z.B. ein Radio od.dgl., nutzen.

Des Weiteren ist unterhalb des Displays 22 auf der Vorderseite 21 der Kippmechanik 5 eine in der dargestellten Ausführungsform 30-polige Steckerleiste 24 ausgebildet, die dem elektrischen und elektronischen Anschluss der Aufnahmeschale 3 an die entsprechenden kraftfahrzeugseitigen Einrichtungen dient.

Wenn sich die Kippmechanik 5 in ihrer aus der Aufnahme 4 ausgefahrenen Stellung befindet, kann die Aufnahmeschale 3 mit einem vergleichsweise geringen Aufwand auf die Vorderseite 21 der Kippmechanik 5 aufmontiert werden. Hierzu sind auf der Vorderseite 21 der Kippmechanik 5 zwei Fanghaken 25 vorgesehen. Diese sind bei der dargestellten Ausführungsform im unteren Bereich der Vorderseite 21 der Kippmechanik 5 angeordnet. Im oberen Bereich der Vorderseite 21 der Kippmechanik ist eine Rasthakenverriegelung 26 mit zwei Rasthaken 27, 28 angeordnet. Diese Rasthakenverriegelung 26 sitzt hinter der Vorderseite 21 und ragt mit den Rasthaken 27, 28 durch eine Ausnehmung 29 der Vorderseite 21. Des Weiteren wird die Rasthakenverriegelung 26 mittels zweier Federn 30 in ihre Verriegelungsstellung vorgespannt. Die Federn 30 sind hinter der Vorderseite 21 der Kippmechanik 5 angeordnet und stützen sich gegen die Seitenwand 16 der Kippmechanik 5 ab. In der Seitenwand 17 der Kippmechanik ist eine Durchbrechung 31 ausgebildet, durch die hindurch ein Betätigungsteil 32 der Rasthakenverriegelung 26 manuell betätigbar ist, so dass die Rasthakenverriegleung 26 gegen die Kraft der Federn 30 aus ihrer Verriegelungs- in ihre Freigabestellung verbringbar ist. Hierdurch ist es möglich, bei aus der Aufnahme 4 ausgefahrener Kippmechanik in einfacher Weise eine auf der Vorderseite 21 der Kippmechanik 5 aufmontierte Aufnahmeschale 3 zu demontieren.

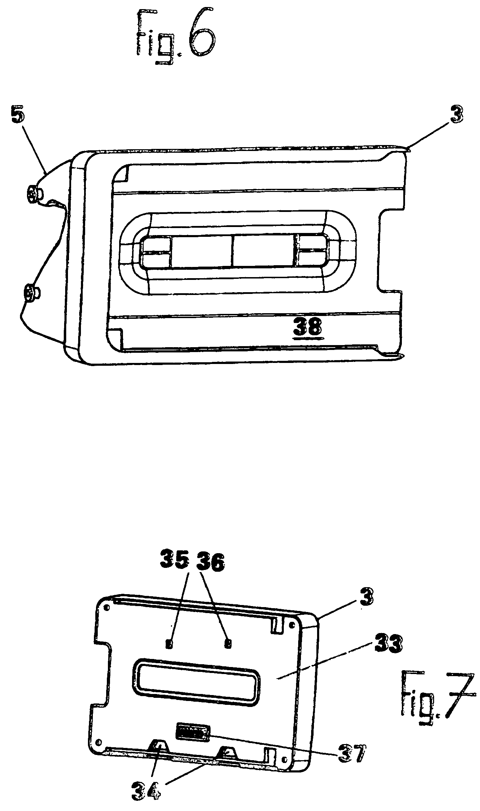

An der in Figur 7 gezeigten Rückseite 33 der Aufnahmeschale 3 sind zwei Öffnungen 34 vorgesehen, die bei der Aufmontage der Aufnahmeschale 3 auf die Vorderseite 21 der Kippmechanik 5 mit den kippmechanikseitigen Fanghaken 25 in Eingriff geraten.

Wenn die beiden aufnahmeschalenseitigen Öffnungen 34 in Eingriff mit den kippmechanikseitigen Fanghaken 25 sind, wird die Aufnahmeschale 3 mit ihrer Rückseite 33 weiter gegen die Vorderseite 21 der Kippmechanik 5 gedrückt. In der Rückseite 33 der Aufnahmeschale 3 sind an denjenigen Positionen, die denen der Rasthaken 27, 28 der kippmechanikseitigen Rasthakenverriegelung 26 entsprechen, zwei Taschen 35, 36 ausgebildet, die so ausgeformt sind, dass sie während des Andrückens die Rasthaken 27, 28 der kippmechanikseitigen Rasthakenverriegelung 26 gegen die Kraft der die Rasthakenverriegelung 26 vorspannenden Federn 30 seitwärts drücken. Die Rasthaken 27, 28 rasten erst dann in die Taschen 35, 36 auf der Rückseite 33 der Aufnahmeschale 3 ein, wenn die Aufnahmeschale 3 mit ihrer Rückseite 33 insgesamt an der Vorderseite 21 der Kippmechanik 5 anliegt.

Wie bereits erwähnt, kann die Aufnahmeschale 3 von der Kippmechanik 5 demontiert werden, wenn die Rasthakenverriegelung 26 durch Betätigung ihres Betätigungsteils 23 durch die Durchbrechung 31 hindurch gegen die Kraft der Federn 30 verschoben wird. Da die Durchbrechung 31 nur bei aus der Aufnahme 4 ausgefahrener Stellung der Kippmechanik 5 zugänglich ist, kann die Aufnahmeschale 3 nur bei aus der Aufnahme 4 ausgefahrener Kippmechanik 5 gewechselt werden.

Auf der Rückseite 33 der Aufnahmeschale 3 ist des Weiteren eine Steckerverbindung in Form eines 30-poligen Steckers 37 vorgesehen, der bei der Montage der Aufnahmeschale 3 an der Vorderseite 21 der Kippmechanik 5 mit der kippmechanikseitigen 30-poligen Steckerleiste 34 in Anschlussverbindung gerät.

Die Aufnahmeschale 3 ist derart ausgestaltet, dass sich ihre Oberfläche bei eingefahrener Stellung der Kippmechanik 5 an die Kontur der sie umgebenden Schachtblende 7 anpasst. Mittels der Aufnahmeschale 3 wird eine Tasche 38 ausgebildet, in die der Tablet-PC eingeschoben werden kann. Im dargestellten Ausführungsbeispiel wird der Tablet-PC 2 von der Seite her in diese Tasche 38 eingeschoben. Der Tablet-PC 2 wird mittels der Tasche 38 so geführt, dass sein Anschlussstecker genau auf einen aufnahmeschalenseitigen Steckeranschluss 39 gerät. Dieser Steckeranschluss 39 ist gegenüber derjenigen Seite der Aufnahmeschale 3 angeordnet, durch die der Tablet-PC in die Tasche 38 der Aufnahmeschale 3 eingeschoben wird.

Darüber hinaus ist etwa mittig der Aufnahmeschale 3 in deren Rückseite 33 eine Ausnehmung 40 ausgebildet, durch die hindurch dann, wenn kein Tablet-PC 2 in die Aufnahmeschale 3 eingeschoben ist, die Tasten 23 und das Display 22 der vorstehend erwähnten Notbedienung zugänglich sind.

An derjenigen Seite der Aufnahmeschale 3, durch die hindurch der Tablet-PC 2 in die Tasche 38 der Aufnahmeschale 3 eingeschoben wird, ist eine Aussparung in Form einer Griffmulde 41 ausgestaltet. Hierdurch ist der Tablet-PC 2 in der Tasche 38 der Aufnahmeschale 3 besser greifbar, so dass er einfacher aus der Aufnahmeschale 3 herausgenommen werden kann.

Die Verriegelungseinrichtung 6 ist bei der dargestellten Ausführungsform in die Schachtblende 7 integriert und hat einen Schieber 42, der so an der Schachtblende 7 angeordnet ist, dass er federvorgespannt gegen die Außenseite der Schachtblende 7 drückt und so die Kippmechanik 5 in deren in der Aufnahme 4 eingefahrenen Stellung blockiert. Dieser Schieber 42 ist mittels eines Knopfs 43 der Verriegelungseinrichtung 6 zurückschiebbar, der in einer Aussparung der Schachtblende 7 angeordnet ist. Wenn der Schieber 42 durch Betätigung des Knopfs 43 verschoben wird, wird die Verriegelung der Kippmechanik innerhalb der Aufnahme 4 aufgehoben, so dass die Kippmechanik durch die Torsionsfedern 18 aus der Aufnahme 4 heraus verstellt wird.

Zur Unterstützung der Steuerung und der Bedienung des Tablet-PC ist darüber hinaus der bereits erwähnte Dreh-Drücksteller 8 vorgesehen; diesem Zweck dient auch der Infrarotsensor 9, der mittels infrarotem Licht in die Lage versetzt ist, Gesten einer Bedienungsperson zu erkennen.

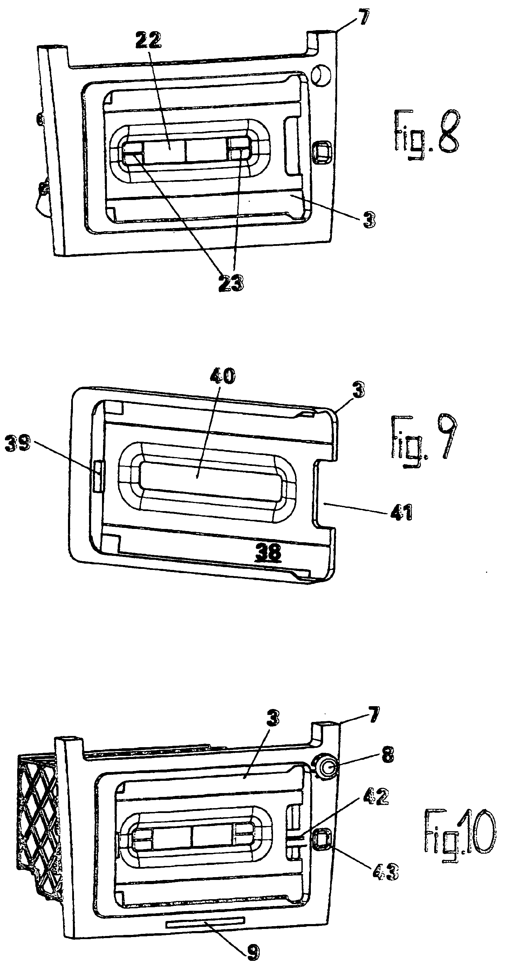

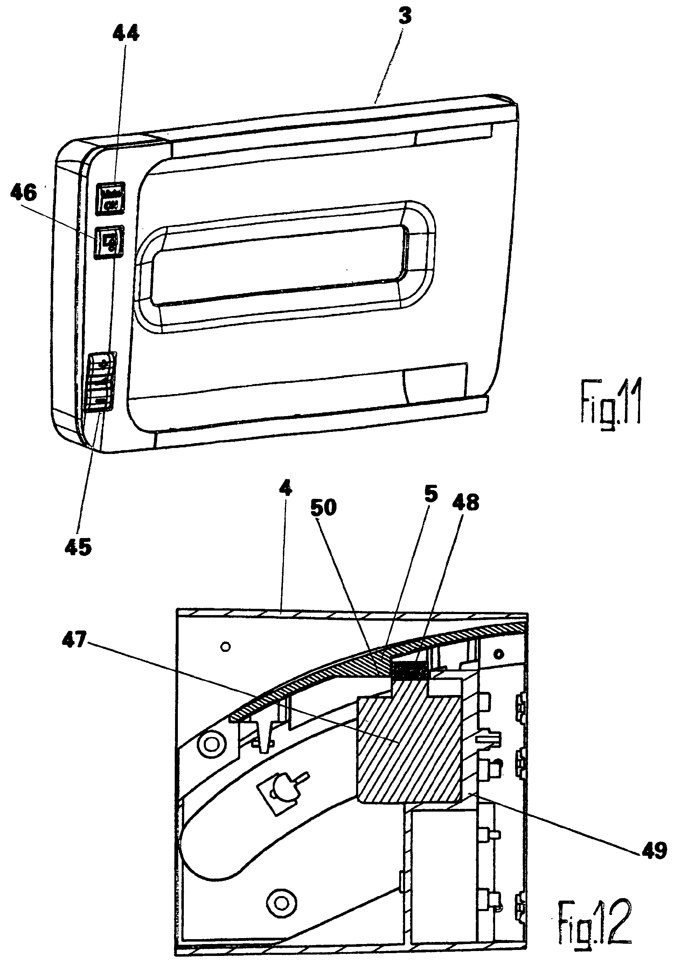

In Figur 11 ist eine Ausführungsform der Aufnahmeschale 3 der erfindungsgemäßen Haltevorrichtung gezeigt, bei der an der auch bei eingelegtem Tablet-PC 2 zugänglichen Vorderseite der Aufnahmeschale 3 eine Einstellvorrichtung 44, 45 sowie eine Freigabetaste 46 vorgesehen sind. Die Einstellvorrichtung 44, 45 kann den in den Figuren 1, 2 und 10 gezeigten Dreh-Drücksteller 8 ersetzen, wohingegen die Freigabetaste 46 die Funktion des in Figur 10 gezeigten Knopfes 43 übernimmt. Wie aus Figur 11 hervorgeht, sind eine Taste 44 zum Ein- und Ausstellen einer Lautsprechereinrichtung sowie eine Wippe 45 zur Regelung des Lautstärkeniveaus im in Figur 11 linken Randbereich der Aufnahmeschale 3 angeordnet. Mittels der Taste 44 und der Wippe 45 können Funktionen des in die Aufnahmeschale 3 eingeschobenen Tablet-PC 2 betätigt werden, wohingegen die Freigabetaste 46 der Entriegelung der in der Aufnahme 4 in ihrer eingefahrenen Stellung verriegelten Kippmechanik 5 dient.

Hierbei kann, wie dies aus Figur 12 hervorgeht, die Verriegelungseinrichtung, mittels der die Kippmechanik 5 in der Aufnahme 4 verriegelbar ist, einen Hubmagneten 47 aufweisen. Zu dem Hubmagneten 47 gehört ein Stößel 48, der mittels einer in Figur 12 nicht gezeigten Feder in eine Blockierstellung vorgespannt ist. In seiner Blockierstellung blockiert der Stößel 48 des Hubmagneten 47 die Kippmechanik 5 in der Aufnahme 4. Hierzu wird der Stößel 48 des Hubmagneten 47 mit Hilfe der nicht gezeigten Feder von einem fest an der Aufnahme 4 vorgesehenen Gehäuse 49 des Hubmagneten 47 weggedrückt.

Wenn bei Betätigung der bei dem in Figur 11 gezeigten Ausführungsbeispiel an der Aufnahmeschale 3 vorgesehenen Freigabetaste 46 der Hubmagnet 47 bestromt wird, wird der Stößel 48 des Hubmagneten 47 in Richtung auf das Gehäuse 49 des Hubmagneten 47 angezogen. Der Hubmagnet 47 ist so im aufnahmefesten Gehäuse 49 verbaut, dass eine an einem oberen Abschnitt der Kippmechanik 5 ausgebildete Rippe 50 beim Einschieben der Kippmechanik 5 in die Aufnahme 4 von oben auf den Stößel 48 des Hubmagneten 47 drückt und diesen Stößel gegen die Kraft der in Figur 12 nicht gezeigten Feder in in Figur 12 abwärtiger Richtung drückt. Wenn die Kippmechanik 5 vollständig in die Aufnahme 4 hineingedrückt wird, überfährt die kippmechanikseitige Rippe 50 den Stößel 48 des aufnahmeseitigen Hubmagneten 47, wobei der Stößel 48 aufgrund der Federkraft vor der Rippe 50 wieder aufwärts verstellt wird. Da die Rippe 50 nun von der hinteren Seite her auf den Stößel 48 des Hubmagneten 47 drückt, kann die Kippmechanik 5 erst dann wieder ausfahren, wenn der Stößel 48 des Hubmagneten 47 aufgrund der Bestromung des Hubmagneten 47 wieder in abwärtiger Richtung verstellt wird. Der Hubmagnet 47 ist in seinem Gehäuse 49 so geführt, dass die Federkraft der Torsionsfedern 18, welche die Kippmechanik 5 in Richtung auf deren aus der Aufnahme 4 ausgefahrene Stellung drücken, vom Stößel 48 des Hubmagneten 47 auf die Führung des Hubmagneten 47 in dessen Gehäuse übertragen.

Mittels der vorstehend geschilderten Verriegelungsvorrichtung kann die Kippmechanik 5 im unbestromten Zustand des Hubmagneten 47 zwar in die Aufnahme 4 hinein verschoben und damit geschlossen werden, jedoch muss zum Herausziehen der Kippmechanik 5 aus der Aufnahme 4 bzw. zum Öffnen derselben ein bestromter Zustand des Hubmagneten 47 vorliegen.

## Patentansprüche

1. Haltevorrichtung zur Halterung eines Tablet-PC (2) in einem Kraftfahrzeug, mit einer Aufnahme (4), die in einen Schacht einer Fahrzeugmittelkonsole einschiebbar und dort fixierbar ist, einer Kippmechanik (5), die in der Aufnahme (4) gehaltert und zwischen einer in die Aufnahme (4) eingefahrenen Stellung und einer aus der Aufnahme (4) herausgefahrenen Stellung verstellbar ist, einer Aufnahmeschale (3), die bei ausgefahrener Stellung der Kippmechanik (5) an der Vorderseite (21) derselben lösbar anbringbar ist und in der der Tablet-PC (2) aufnehmbar ist, und einer Verriegelungseinrichtung (6), mittels der die Kippmechanik (5) in ihrer in der Aufnahme (4) eingefahrenen Stellung verriegelbar ist, **dadurch gekennzeichnet, dass** eine von der Aufnahmeschale (3) zur Halterung des Tablet-PC (2) ausgebildete Tasche (38) so geformt ist, dass der Tablet-PC (2) seitlich in die Tasche (38) einschiebbar ist und dass beim Einschieben des Tablet-PC ein Steckeranschluss des Tablet-PC (2) mit einem Steckeranschluss (39) der Aufnahmeschale (3) in Eingriff gerät.

2. Haltevorrichtung nach Anspruch 1, deren Aufnahmeschale (3) von einer Schachtblende (7) umgeben ist, die eine Öffnung des Schachts der Fahrzeugmittelkonsole abschließend umgibt.

3. Haltevorrichtung nach Anspruch 2, mit einem Dreh-Drücksteller (8), der in bzw. an der Schachtblende (7) gehaltert ist und mittels dem Funktionen des in die Aufnahmeschale (3) eingeschobenen Tablet-PC (2) betätigbar sind.

4. Haltevorrichtung nach Anspruch 2 oder 3, mit einem Infrarotsensor (9), der in bzw. an der Schachtblende (7) gehaltert ist und mittels dem Gesten einer Bedienungsperson, z.B. eine Wischbewegung od.dgl., berührungslos erkennbar sind.

5. Haltevorrichtung nach einem der Ansprüche 1 bis 4, mit einer Führungseinrichtung (12, 15), die zwischen der Aufnahme (4) einerseits und der Kippmechanik (5) andererseits angeordnet ist und mittels der die Kippmechanik (5) in ihrer aus der Aufnahme (4) ausgefahrenen Stellung so positionierbar ist, dass ihre Vorderfläche (21) etwa vertikal zu einem Fahrer bzw. Beifahrer angeordnet ist.

6. Haltevorrichtung nach Anspruch 5, deren Führungseinrichtung (12, 15) in beiden einander gegenüberliegenden Seitenwänden (10, 11) der Aufnahme (4) jeweils zwei gekrümmte Führungsschlitze (12) aufweist, in die entsprechend an den Seitenwänden (16, 17) der Kippmechanik (5) angeordnete Führungsbolzen (15) eingreifen.

7. Haltevorrichtung nach einem der Ansprüche 1 bis 6, bei der zwischen der Aufnahme (4) einerseits und der Kippmechanik (5) andererseits zumindest eine, vorzugsweise zwei Torsionsfedern (18) angeordnet ist bzw. sind, mittels der bzw. denen die Kippmechanik (5) in Richtung auf ihre aus der Aufnahme (4) ausgefahrene Stellung vorgespannt ist.

8. Haltevorrichtung nach einem der Ansprüche 1 bis 7, bei der auf der Innenseite der beiden Seitenwände (10, 11) der Aufnahme (4) jeweils ein Rotationsdämpfer (14) angeordnet ist, der im Zusammenwirken mit einer entsprechend an der jeweiligen Seitenwand (16, 17) der Kippmechanik (5) ausgebildeten Zahnflankenkontur bzw. Verzahnung (20) eine Bewegung der Kippmechanik (5) in Richtung auf deren aus der Aufnahme (4) herausgefahrene Stellung verlangsamt.

9. Haltevorrichtung nach einem der Ansprüche 1 bis 8, deren Kippmechanik (5) an ihrer Vorderseite (21) ein Display (22) und vorzugsweise vier Tasten (23) aufweist, mittels denen fahrzeugseitige Einrichtungen, z.B. ein Radio od.dgl., bedien- und steuerbar sind.

10. Haltevorrichtung nach einem der Ansprüche 1 bis 9, deren Kippmechanik (5) an ihrer Vorderseite (21) eine Steckerverbindung (24) aufweist, die vorzugsweise als 30-polige Steckerleiste (24) ausgebildet ist, und deren Aufnahmeschale (3) an ihrer Rückseite (33) eine Steckerverbindung (37) aufweist, die vorzugsweise als 30-poliger Stecker (37) ausgebildet ist, wobei die kippmechanikseitige und die aufnahmeschalenseitige Steckerverbindung (24, 37) bei der Anbringung der Aufnahmeschale (3) an der Kippmechanik (5) in Eingriff bringbar sind.

11. Haltevorrichtung nach einem der Ansprüche 1 bis 10, bei der auf der Vorderseite (21) der Kippmechanik (5) zwei Fanghaken (25) ausgebildet sind, mit denen zwei auf der Rückseite (33) der Aufnahmeschale (3) ausgebildete Öffnungen (34) in Eingriff bringbar sind, wobei hinter der Vorderseite (21) der Kippmechanik (5) eine federvorgespannte Rasthakenverriegelung (26) vorgesehen ist, die mit Taschen (35, 36), die auf der Rückseite der Aufnahmeschale (3) ausgebildet sind, verrastbar ist.

12. Haltevorrichtung nach Anspruch 11, bei der in einer Seitenwand (16) der Kippmechanik (5) eine Durchbrechung (31) ausgebildet ist, durch die hindurch in der aus der Aufnahme (4) ausgefahrenen Stellung der Kippmechanik (5) die Rasthakenverriegelung (26) in eine die Verrastung zwischen der kippmechanikseitigen Rasthakenverriegelung (26) und den aufnahmeschalenseitigen Taschen (35, 36) aufhebende Freigabestellung verstellbar ist.

13. Haltevorrichtung nach einem der Ansprüche 2 bis 12, deren Aufnahmeschale (3) an ihrem Randbereich so gestaltet ist, dass sie sich in in die Aufnahme (4) eingefahrener Stellung der Kippmechanik (5) an eine Kontur der Schachtblende (7) anpasst.

14. Haltevorrichtung nach einem der Ansprüche 9 bis 13, deren Aufnahmeschale (3) etwa mittig eine Ausnehmung (40) aufweist, durch die hindurch das kippmechanikseitige Display (22) sichtbar und die kippmechanikseitigen Tasten (23) betätigbar sind, wenn in der Aufnahmeschale (3) kein Tablet-PC (2) angeordnet ist.

15. Haltevorrichtung nach einem der Ansprüche 1 bis 14, deren Aufnahmeschale (3) eine randseitige Aussparung bzw. Griffmulde (41) aufweist, durch die hindurch der Tablet-PC (2) beim Herausnehmen desselben aus der Aufnahmeschale (3) greifbar ist.

16. Haltevorrichtung nach einem der Ansprüche 2 bis 15, deren Verriegelungseinrichtung (6) einen Schieber (42) aufweist, der gegen die Schachtblende (7) zur Blockierung der Kippmechanik (5) in deren in der Aufnahme (4) eingefahrenen Stellung federvorgespannt ist und mittels eines in der Schachtblende (7) angeordneten und von deren Vorderseite her betätigbaren Knopfes (43) in eine Freigabestellung verstellbar ist, in der die Kippmechanik (5) aus der Aufnahme (4) heraus bewegbar ist.

17. Haltevorrichtung nach einem der Ansprüche 1, 2 und 4 bis 16, mit einer Einstellvorrichtung (44, 45), die an der Aufnahmeschale (3) angeordnet ist und mittels der Funktionen des in die Aufnahmeschale (3) eingeschobenen Tablet-PC (2) betätigbar sind.

18. Haltevorrichtung nach Anspruch 17, bei der die aufnahmeschalenseitige Einstellvorrichtung (44, 45) eine Taste (44) zum Ein- und Ausstellen einer Lautsprechereinrichtung und eine Wippe (45) zur Einstellung der Lautstärke aufweist.

19. Haltevorrichtung nach einem der Ansprüche 1 bis 15, 17 und 18, deren der Verriegelung der Kippmechanik (5) in der Aufnahme (4) dienende Verriegelungseinrichtung eine Freigabetaste (46) aufweist, die an der Aufnahmeschale (3) angeordnet ist.

20. Haltevorrichtung nach Anspruch 19, bei der mittels der Freigabetaste (46) ein Hubmagnet (47) der Verriegelungseinrichtung, der in einer Blockierstellung die Kippmechanik (5) in deren in der Aufnahme (4) eingefahrenen Stellung verriegelt, aus seiner Blockierstellung in eine Freigabestellung verstellbar ist, in der die Kippmechanik (5) aus ihrer in der Aufnahme (4) eingefahrenen Stellung in ihre aus der Aufnahme (4) herausgefahrene Stellung verstellbar ist.

## Claims

1. A holding device for holding a tablet (2) in a motor vehicle, having a receptacle (4) that can be inserted into a slot in a vehicle centre console and fixed there, a tilting mechanism (5) which is mounted in the receptacle (4) and can be adjusted between a retracted position in the receptacle (4) and a position extended out of the receptacle (4), a cradle (3) which, when the tilting mechanism (5) is in the extended position, can be attached to the front side (21) of the same in a detachable manner and in which the tablet (2) can be held, and a locking mechanism (6), by means of which the tilting mechanism (5) can be locked in its position retracted in the receptacle (4), **characterized in that** a pocket (38) formed by the cradle (3) to hold the tablet (2) is formed in such a manner that the table (2) can be inserted laterally into the pocket (38) and that when the tablet is inserted, a plug connection of the tablet (2) comes into engagement with a plug connection (39) of the cradle (3).

2. The holding device according to claim 1, the cradle (3) whereof is surrounded by a slot aperture (7) finally surrounding an opening of the slot in the vehicle centre console.

3. The holding device according to claim 2, comprising a rotary pressure regulator (8) which is mounted in or on the slot aperture (7) and can be actuated by means of the functions of the tablet (2) inserted in the cradle (3).

4. The holding device according to claim 2 or 3, having an infrared sensor (9) which is mounted in or on the slot aperture (7) and can be recognized in a contactless manner by means of the gestures of an operator, e.g. a wiping motion or the like.

5. The holding device according to one of claims 1 to 4, having a guide mechanism (12, 15) which is arranged between the receptacle (4) on the one hand and the tilting mechanism (5) on the other and by means of which the tilting mechanism (5) can be positioned in its extended position from the receptacle (4), in such a manner that its front surface (21) is arranged approximately vertically to a driver or front passenger.

6. The holding device according to claim 5, the guide mechanism (12, 15) whereof has in both side walls lying opposite one other (10, 11) of the receptacle (4) two curved guide slots (12) in each case, with which the guide pins (15) arranged correspondingly on the side walls (16, 17) of the tilting mechanism (5) engage.

7. The holding device according to one of claims 1 to 6, in which between the receptacle (4) on the one hand and the tilting mechanism (5) on the other at least one, preferably two, torsion springs (18) is/are arranged, by means of which or to which the tilting mechanism (5) is biased in the direction of its position extended from the receptacle (4).

8. The holding device according to one of claims 1 to 7, wherein a rotational damper (14) is arranged on the inside of the two side walls (10, 11) of the receptacle (4) in each case, which rotation damper, by interaction with a tooth flank contour or else toothing (2) configured accordingly on the respective side wall (16, 17) of the tilting mechanism (5), slows down a movement of the tilting mechanism (5) in the direction of the position thereof extended from the receptacle (4).

9. The holding device according to one of claims 1 to 8, the tilting mechanism (5) whereof has on its front side (21) a display (22) and preferably four keys (23), by means of which on-board vehicle devices, e.g. a radio or the like, can be operated and controlled.

10. The holding device according to one of claims 1 to 9, the tilting mechanism (5) whereof has on its front side (21) a plug connection (24) which is preferably configured as a 30-pin plug connector (24) and the cradle (3) whereof has a plug connection (37) on its rear side (33) which is preferably in the form of a 30-pin plug connector (37), wherein the plug connection (24, 37) on the tilting mechanism side and the cradle side can be brought into engagement during attachment of the cradle (3) to the tilting mechanism (5).

11. The holding device according to one of claims 1 to 10, wherein on the front side (21) of the tilting mechanism (5) two hooks (25) are formed, with which two openings (34) formed on the rear side (33) of the cradle (3) can be brought into engagement, wherein behind the front side (21) of the tilting mechanism (5) a spring-biased latching hook lock (26) is provided which can be locked with pockets (35, 36) which are formed on the rear side of the cradle (3).

12. The holding device according to claim 11, wherein an opening (31) is formed in a side wall (16) of the tilting mechanism (5), through which in the position of the tilting mechanism (5) extended from the receptacle (4), the latching hook lock (26) can be adjusted in a release position cancelling the lock between the latching hook lock (26) on the tilting mechanism side and the pockets (35, 36) on the cradle side.

13. The holding device according to one of claims 2 to 12, the cradle (3) whereof is shaped at its edge region in such a manner that it fits a contour of the slot aperture (7) in the position of the tilting mechanism (5) retracted into the receptacle (4).

14. The holding device according to one of claims 9 to 13, the cradle (3) whereof has a recess (40) roughly in the centre, through which the display (22) on the tilting mechanism side is visible and the keys (23) on the tilting mechanism side can be actuated when there is no tablet (2) arranged in the cradle (3).

15. The holding device according to one of claims 1 to 14, the cradle (3) whereof has a peripheral recess or recessed grip (41), through which the tablet (2) can be held when removing the same from the cradle (3).

16. The holding device according to one of claims 2 to 15, the locking mechanism (6) whereof has a slide (42) which is spring-biased against the slot aperture (7) to block the tilting mechanism (5) in the position thereof retracted in the receptacle (4) and is adjustable by means of a knob (43) arranged in the slot aperture (7) and actuable from the front side thereof into a release position, in which the tilting mechanism (5) can be moved out of the receptacle (4).

17. The holding device according to one of claims 1, 2 and 4 to 16, having an adjusting device (44, 45) which is arranged on the cradle (3) and can be actuated by means of the functions of the tablet (2) inserted in the cradle (3).

18. The holding device according to claim 17, wherein the adjusting device (44, 45) on the cradle side has a key (44) for loading and displaying a speaker device and a rocker switch (45) for volume adjustment.

19. The holding device according to one of claims 1 to 15, 17 and 18, the locking mechanism whereof used to lock the tilting mechanism (5) in the receptacle (4) has a release key (46) which is arranged on the cradle (3).

20. The holding device according to claim 19, wherein by means of the release key (46) a lifting magnet (47) of the locking mechanism, which in a blocking position locks the tilting mechanism (5) in its retracted position in the receptacle (4), is adjustable from its blocking position into a release position in which the tilting mechanism (5) is adjustable from its retracted position in the receptacle (4) into its extended position from the receptacle (4).

## Revendications

1. Dispositif de support pour le maintien d'une tablette électronique (2) dans un véhicule automobile, avec un logement (4) pouvant être inséré dans une cavité d'une console centrale de véhicule et y être fixée, un mécanisme de basculement (5) qui est maintenu dans le logement (4) et peut être réglé entre une position insérée dans le logement (4) et une position sortie du logement (4), une coque de logement (3) laquelle, en cas de position sortie du mécanisme de basculement (5), peut être montée de manière amovible sur la face avant (21) de celui-ci et à l'intérieur de laquelle la tablette électronique (2) peut être logée, et un dispositif de verrouillage (6) au moyen duquel le mécanisme de basculement (5) peut être verrouillé dans sa position insérée dans le logement (4), **caractérisé en ce qu'**une poche (38) formée par la coque de logement (3) pour le maintien de la tablette électronique (2) est formée d'une manière telle, que la tablette électronique (2) peut être insérée latéralement dans la poche (38) et que lors de l'insertion de la tablette électronique, un raccord de connecteur de la tablette électronique (2) se met en prise avec un raccord de connecteur (39) de la coque de logement (3).

2. Dispositif de support selon la revendication 1, dont la coque de logement (3) est entourée par un obturateur de cavité (17) qui entoure de manière à fermer une ouverture de la cavité de la console centrale de véhicule.

3. Dispositif de support selon la revendication 2, avec un actionneur de poussée-rotation (8), lequel est fixé dans ou sur l'obturateur de cavité (7) et au moyen duquel des fonctions de la tablette électronique (2) insérée dans la coque de logement (3) peuvent être actionnées.

4. Dispositif de support selon la revendication 2 ou 3, avec un capteur infrarouge (9) qui est fixé dans ou sur l'obturateur de cavité (7) et au moyen duquel des gestes d'un opérateur, par exemple un mouvement d'essuyage ou similaire, peuvent être reconnus sans contact.

5. Dispositif de support selon l'une des revendications 1 à 4, avec un dispositif de guidage (12, 15) qui est disposé entre le logement (4) d'un côté et le mécanisme de basculement (5) de l'autre côté et au moyen duquel le mécanisme de basculement (5) peut être positionné dans sa position sortie hors du logement (4) d'une manière telle, que sa surface avant (21) est disposée à peu près verticalement par rapport à un conducteur ou passager.

6. Dispositif de support selon la revendication 5, dont le dispositif de guidage (12, 15) présente, dans les deux parois latérales (10, 11) disposées en vis-à-vis l'une de l'autre du logement (4), respectivement deux fentes de guidage recourbées (12) dans lesquelles des broches de guidage (15) disposées de manière correspondante sur les parois latérales (16, 17) du mécanisme de basculement (5) sont en prise.

7. Dispositif de support selon l'une des revendications 1 à 6, dans lequel, entre le logement (4) d'un côté et le mécanisme de basculement (5) de l'autre côté, au moins un, de préférence deux ressorts de torsion (18) est ou sont disposé(s), au moyen duquel ou desquels le mécanisme de basculement (5) est précontraint en direction de sa position sortie du logement (4).

8. Dispositif de support selon l'une des revendications 1 à 7, dans lequel, sur le côté intérieur des deux parois latérales (10, 11) du logement (4), respectivement un amortisseur de rotation (14) est disposé lequel, lors de la coopération avec un contour de flanc de dent ou une denture (20) formé(e) de manière correspondante sur la paroi latérale (16, 17) respective du mécanisme de basculement (5), ralentit un mouvement du mécanisme de basculement (5) en direction de sa position sortie du logement (4).

9. Dispositif de support selon l'une des revendications 1 à 8, dont le mécanisme de basculement (5) présente, sur sa face avant (21), un afficheur (22) et de préférence quatre touches (23) au moyen desquelles il est possible d'actionner ou commander des installations côté véhicule, par exemple une radio ou similaire.

10. Dispositif de support selon l'une des revendications 1 à 9, dont le mécanisme de basculement (5) présente sur sa face avant (21) un raccordement par fiche (24), lequel est de préférence réalisé en tant que réglette à fiches à 30 pôles (24), et dont la coque de logement (3) présente sur sa face arrière (33) un raccordement par fiche (37) qui est de préférence réalisé en tant que fiche mâle à 30 pôles (37), dans lequel les raccordements par fiche (24, 37) côté mécanisme de basculement et côté coque de logement peuvent être mis en prise, lors du montage de la coque de logement (3), avec le mécanisme de basculement (5).

11. Dispositif de support selon l'une des revendications 1 à 10, dans lequel deux crochets d'attache (25) sont formés sur la face avant (21) du mécanisme de basculement (5), avec lesquels deux ouvertures (34) formées sur la face arrière (33) de la coque de logement (3) peuvent être mises en prise, dans lequel on prévoit, derrière la face avant (21) du mécanisme de basculement (5), un verrouillage par crochets d'encliquetage (26) précontraint par ressort pouvant s'encliqueter avec des poches (35, 36) qui sont formées sur la face arrière de la coque de logement (3).

12. Dispositif de support selon la revendication 11, dans lequel une brèche (31) est formée dans une paroi latérale (16) du mécanisme de basculement (5), à travers laquelle, dans la position sortie du logement (4) du mécanisme de basculement (5), le verrouillage par crochets d'encliquetage (26) peut être réglé dans une position de libération annulant l'encliquetage entre le verrouillage par crochets d'encliquetage (26) côté mécanisme de basculement et les poches (35, 36) côté coque de logement.

13. Dispositif de support selon l'une des revendications 2 à 12, dont la coque de logement (3) est réalisée au niveau de sa zone du bord de manière à ce que, dans la position insérée dans le logement (4) du mécanisme de basculement (5), elle s'adapte à un contour de l'obturateur de cavité (7).

14. Dispositif de support selon l'une des revendications 9 à 13, dont la coque de logement (3) présente un évidement (40) à peu près central, à travers lequel l'afficheur (22) côté mécanisme de basculement est visible et les touches (23) côté mécanisme de basculement sont actionnables lorsqu'aucune tablette électronique (2) n'est disposée dans la coque de logement (3).

15. Dispositif de support selon l'une des revendications 1 à 14, dont la coque de logement (3) présente un creux ou une poignée concave (41) du côté du bord, à travers laquelle la tablette électronique (2) peut être saisie lors de la sortie de celle-ci hors de la coque de logement (3).

16. Dispositif de support selon l'une des revendications 2 à 15, dont le dispositif de verrouillage (6) présente un coulisseau (42), lequel est précontraint contre l'obturateur de cavité (7) pour le blocage du mécanisme de basculement (5) dans la position insérée dans le logement (4) de celui-ci et lequel peut être réglé dans une position de libération au moyen d'un bouton (43) disposé dans l'obturateur de cavité (7) et actionnable depuis la face avant de celui-ci, dans laquelle position le mécanisme de basculement (5) peut être déplacé hors du logement (4).

17. Dispositif de support selon l'une des revendications 1, 2 et 4 à 16, avec un dispositif de réglage (44, 45) qui est disposé sur la coque de logement (3) et au moyen duquel il est possible d'actionner des fonctions de la tablette électronique (2) insérée dans la coque de logement (3).

18. Dispositif de support selon la revendication 17, dans lequel le dispositif de réglage (44, 45) côté coque de logement présente une touche (44) pour allumer et éteindre un dispositif de haut-parleur et un bouton à bascule (45) pour le réglage du volume sonore.

19. Dispositif de support selon l'une des revendications 1 à 15, 17 et 18, dont le dispositif de verrouillage servant au verrouillage du mécanisme de basculement (5) dans le logement (4) présente une touche de libération (46), laquelle est disposée sur la coque de logement (3).

20. Dispositif de support selon la revendication 19, dans lequel, au moyen de la touche de libération (46), un aimant de levage (47) du dispositif de verrouillage, lequel verrouille le mécanisme de basculement (5) dans sa position insérée dans le logement (4) dans une position de blocage, peut être réglé de sa position de blocage dans une position de libération dans laquelle le mécanisme de basculement (5) peut être réglé de sa position insérée dans le logement (4) vers sa position sortie hors du logement (4).
